# EUROPÄISCHE PATENTSCHRIFT

(11) **EP 2 559 127 B1**
(45) Veröffentlichungstag und Bekanntmachung des Hinweises auf die Patenterteilung: **15.04.2015**
(21) Anmeldenummer: 11717925.9
(22) Anmeldetag: 25.03.2011
(51) Int. Cl.: H02H 3/33, H02H 1/06

(54) **FEHLERSTROMSCHUTZSCHALTER**
RESIDUAL CURRENT DEVICE
DISJONCTEUR DIFFÉRENTIEL

(30) Priorität: 14.04.2010 AT 5952010
(43) Veröffentlichungstag der Anmeldung: 20.02.2013
(73) Patentinhaber: Eaton Industries (Austria) GmbH, 3943 Schrems (AT)
(72) Erfinder: RITZINGER, Georg, A-3424 Zeiselmauer-Wolfpassing (AT)
(74) Vertreter: Eaton IP Group EMEA
(86) Internationale Anmeldenummer: PCT/AT2011/000151
(87) Internationale Veröffentlichungsnummer: WO 2011/127498

(56) Entgegenhaltungen:
- WO-A1-02/054557
- WO-A1-2009/100470
- DE-A1-102004 056 976
- DE-A1-102005 008 431
- GB-A- 2 251 741
- GB-A- 2 269 064
- US-A- 4 833 564

## Beschreibung

Die Erfindung betrifft einen Fehlerstromschutzschalter gemäß dem Oberbegriff des Patentanspruches 1.

Fehlerstromschutzschalter sind dazu vorgesehen, im Falle des Auftretens eines Fehlerstromes einer bestimmten Höhe auszulösen, und derart ein elektrisches Teilnetz von einem Energieversorgungsnetz zu trennen. Unterschiedliche Alterungsvorgänge, wie etwa eine Veränderung bzw. Verschlechterung der magnetischen Eigenschaften eines Summenstromwandlers, können dazu führen, dass der zum Auslösen des Fehlerstromschutzschalters erforderliche Fehlerstrom mit der Zeit ansteigt. Dies bleibt für einen Benutzer in der Regel lange Zeit unbemerkt. Zwar hat der Benutzer die Möglichkeit die Funktion des Fehlerstromschutzschalters mittels der Prüfeinrichtung zu überprüfen, allerdings wird durch eine derartige Prüfeinrichtung in der Regel, bzw. wenigstens bei herkömmlichen netzspannungsunabhängigen Fehlerstromschutzschaltern, ein simulierter Prüffehlerstrom erzeugt, welcher deutlich höher ist, als der Bemessungsfehlerstrom des betreffenden Fehlerstromschutzschalters. Aus einem erfolgreichen Test eines Fehlerstromschutzschalters kann daher nicht zwingend auf dessen ordnungsgemäße Funktion im Fehlerfall geschlossen werden. Zudem ist bei der, insbesondere bei netzspannungsunabhängigen Fehlerstromschutzschaltern üblichen Prüfeinrichtung die Höhe des tatsächlich erzeugten Prüffehlerstroms von der momentan anliegenden Netzspannung abhängig, welche naturgemäß gewissen, unvorhersehbaren Schwankungen unterliegt. "Alte" Fehlerstromschutzschalter stellen somit möglicherweise eine Gefahr für Lebewesen und Anlagen dar, wobei derzeit für einen Benutzer nicht feststellbar ist, ob ein bestimmter eingebauter Fehlerstromschutzschalter noch Schutz bietet. WO 2009/100470 A beschreibt einen solchen netzspannungsunabhängigen Fehlerstromschutzschalter.

Die US 4 833 564 A beschreibt einen netzspannungsabhängigen Fehlerstromschutzschalter mit einer einstellbaren Auslöseempfindlichkeit, wobei weiters der Prüfstromkreis derart ausgebildet ist, dass der jeweils erzeugte Prüfstrom an die jeweils eingestellte Auslöseempfindlichkeit angepasst ist.

Aufgabe der Erfindung ist es daher einen Fehlerstromschutzschalter der eingangs genannten Art anzugeben, mit welchem die genannten Nachteile vermieden werden können, und bei welchem genauer als bisher, insbesondere netzspannungsunabhängig, die Funktionssicherheit überprüft werden kann.

Erfindungsgemäß wird dies durch die Merkmale des Patentanspruches 1 erreicht.

Dadurch kann aus einer erfolgreichen Prüfung eines Fehlerstromschutzschalters mittels der entsprechenden Prüfeinrichtung auf die tatsächliche Funktion bzw. Funktionssicherheit des Fehlerstromschutzschalters im Fehlerfall geschlossen werden. Dadurch kann unabhängig von der jeweils anliegenden Netzspannung ein genau definierter Prüffehlerstrom erzeugt werden. Dadurch kann sichergestellt werden, dass im Falle einer erfolgreichen Prüfung des Fehlerstromschutzschalters mit dessen Prüfeinrichtung, der betreffende Fehlerstromschutzschalter auch im Falle eines tatsächlich auftretenden Fehlerstromes bei dem vorgesehenen Wert des Fehlerstromes, daher dem sog. Bemessungsfehlerstrom, auslöst.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine schematische Darstellung eines Fehlerstromschutzschalters gemäß dem Stand der Technik; und
Fig. 2 eine schematische Darstellung einer bevorzugten Ausführungsform eines erfindungsgemäßen Fehlerstromschutzschalters.

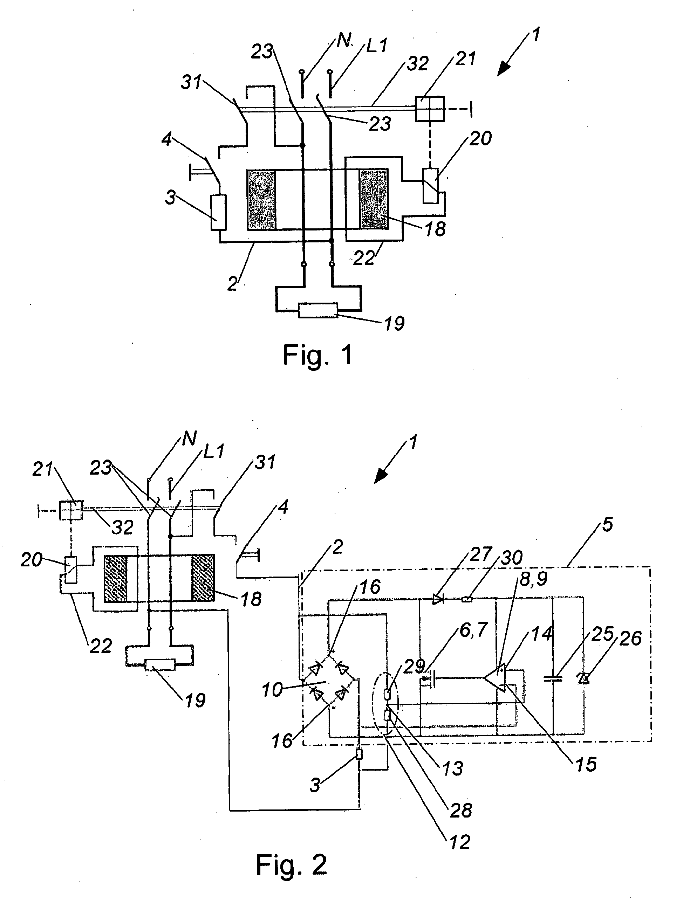

Fig. 2 zeigt einen Fehlerstromschutzschalter 1, mit einem Prüfstromkreis 2 zum Erzeugen eines Prüffehlerstroms, welcher Prüfstromkreis 2 wenigstens einen ersten Prüfwiderstand 3 sowie einen Prüftaster 4 aufweist, wobei der Prüfstromkreis 2 einen Regelstromkreis 5 aufweist, und dass der Regelstromkreis 5 derart ausgebildet ist, dass ein durch den Prüfstromkreis 2 erzeugter Prüffehlerstrom - im Wesentlichen unabhängig von der anliegenden Spannung eines elektrischen Netzes - einen vorbestimmten und im Wesentlichen konstanten Wert aufweist.

Dadurch kann aus einer erfolgreichen Prüfung eines Fehlerstromschutzschalters 1 mittels der entsprechenden Prüfeinrichtung bzw. dem Prüfstromkreis 2 auf die tatsächliche Funktion bzw. Funktionssicherheit des Fehlerstromschutzschalters 1 im Fehlerfall geschlossen werden. Dadurch kann unabhängig von der jeweils anliegenden Netzspannung ein genau definierter Prüffehlerstrom erzeugt werden. Dadurch kann sichergestellt werden, dass im Falle einer erfolgreichen Prüfung des Fehlerstromschutzschalters 1 mit dessen Prüfstromkreis 2, der betreffende Fehlerstromschutzschalter 1 auch im Falle eines tatsächlich auftretenden Fehlerstromes bei dem vorgesehenen Wert des Fehlerstromes, daher dem sog. Bemessungsfehlerstrom, auslöst.

Ein elektrisches Netz bezeichnet insbesondere ein elektrisches Energieversorgungsnetz mit wenigstens einem Neutralleiter und einer stromführenden Phase bzw. Außenleiter.

Bei einem erfindungsgemäßen Fehlerstromschutzschalter 1 kann es sich um jede Art eines Fehlerstromschutzschalters 1 handeln, welcher insbesondere weitere Funktionalitäten und Baugruppen aufweisen kann, als die in der gegenständlichen Erfindung beschriebenen. Wie in Fig. 1 dargestellt sind erfindungsgemäße Fehlerstromschutzschalter 1 insbesondere zur Verwendung an einem elektrischen Netz mit zwei Leitern N, L1 vorgesehen. Es können jedoch Ausführungsformen mit jeder vorgebbaren Anzahl an Leitungen bzw. Leitern, etwa drei oder vier, eines elektrischen Energieversorgungsnetzes bzw. Energieverteilungsnetzes vorgesehen sein. Der Fehlerstromschutzschalter 1 ist vorgesehen Lebewesen und/oder Anlagen, wie auch das elektrische Netz, vor fehlerstrombedingten Auswirkungen zu schützen. Ein erfindungsgemäßer Fehlerstromschutzschalter 1 weist eine Vorrichtung zur Detektion eines Fehlerstromes auf, wobei bevorzugt vorgesehen ist, dass diese Vorrichtung als Summenstromwandler 18 ausgebildet ist, wie auch in Fig. 2 dargestellt. Gemäß der dargestellten besonders bevorzugten Ausführungsform eines erfindungsgemäßen Fehlerstromschutzschalters 1 weist dieser wenigstens einen Summenstromwandler 18 auf, durch welchen wenigstens ein erster Leiter N und ein zweiter Leiter L1 eines zu schützenden elektrischen Netzes geführt sind, wobei auf dem Summenstromwandler 18 wenigstens eine Sekundärwicklung 22 angeordnet ist, wobei die Sekundärwicklung 22 schaltungstechnisch mit einem Auslöser 20 verbunden ist.

Der Summenstromwandler 18 weist einen Wandlerkern, umfassend einen Magnetwerkstoff, auf, durch welchen wenigstens der erste und zweite Leiter N, L1 als Primärwicklung geführt sind. Die Bezeichnung "durch den Summenstromwandler 18 geführt" bezieht sich dabei auf die übliche Ausführung des Summenstromwandlers 18 mit einem ringförmigen Wandlerkern, welcher eine Öffnung aufweist, durch welche die betreffenden Leiter geführt sind. Bevorzugt sind diese Leiter weiters wenigstens einmal um den Querschnitt dieses "Rings" herumgeführt bzw. gewickelt.

Auf dem Summenstromwandler 18 ist weiters eine Sekundärwicklung 22 zur Detektion eines Fehlerstromsignals angeordnet, welche bevorzugt durch einen mehrmals um den Querschnitt des "Rings" gewickelten Leiter, etwa einem dünnen Draht, gebildet ist. Die Sekundärwicklung 22 ist schaltungstechnisch wenigstens mittelbar mit einem Auslöser 20 verbunden, welcher bevorzugt als Permanentmagnetauslöser ausgebildet ist, wodurch eine besonders sichere und schnelle Ansprache des Fehlerstromschutzschalters 1 erreicht werden kann. Der Auslöser 20 wirkt mechanisch über ein Schaltschloss 21 auf Trennkontakte 23. Beim Auftreten eines gefährlichen Fehlerstromes, wird ein entsprechendes Fehlerstromsignal in der Sekundärwicklung 22 erzeugt, und der Auslöser 20 wirkt auf die Trennkontakte 23, welche geöffnet werden, und den ersten und zweiten Leiter N, L1 bzw. gegebenenfalls den dritten und vierten Leiter durchtrennen.

Ein erfindungsgemäßer Fehlerstromschutzschalter 1 weist weiters einen Prüfstromkreis 2 auf, welcher dazu ausgebildet und vorgesehen ist, einen simulierten Prüffehlerstrom zu erzeugen. Der Prüfstromkreis 2 verbindet dabei den ersten Leiter N mit dem zweiten Leiter L1, wobei diese Verbindungsleitung nicht durch den Summenstromwandler 18, sondern "außen" an diesem vorbei geführt ist. Der Prüfstromkreis 2 ist im normalen Betrieb des Fehlerstromschutzschalters 1 nicht geschlossen, es fließt daher kein Strom in diesem Prüfstromkreis 2. Zum Schließen des Prüfstromkreises 2 weist dieser einen Prüftaster 4 auf. Weiters weist der Prüfstromkreis 2 wenigstens einen ersten Prüfwiderstand 3 auf. Als Prüfwiderstand 3 im Sinne der gegenständlichen Erfindung wird ein Widerstand bezeichnet, welcher im Wesentlichen als rein ohmscher Widerstand wirkt, bzw. wenigstens bei der Frequenz des zu schützenden Netzes als rein ohmscher Widerstand wirkt.

Der Prüfstromkreis 2 weist weiters gemäß den in den Fig. 1 und 2 dargestellten Ausführungsformen einen sog. Prüfkreistrennkontakt 31 auf, welcher mechanisch mit dem Schaltschloss 21 bzw. den weiteren Trennkontakten 23 verbunden ist, und bei einem Öffnen der Trennkontakte 23 ebenfalls geöffnet wird. Dadurch kann verhindert werden, dass bei Betätigung des Prüftasters 4 und bereits erfolgter Auslösung des Fehlerstromschutzschalters 1 weiter Strom über den Prüfstromkreis 2 und den ersten Prüfwiderstand 3 fließt. Ein derartiger weiterhin fließender Strom würde zu erheblichen Verlustleitungen an dem ersten Prüfwiderstand 3 führen, welche zur thermischen Zerstörung des bzw. der Prüfwiderstände 3 führen könnte. Durch den Prüfkreistrennkontakt 31 kann dies sicher verhindert werden, und der erste Prüfwiderstand 3 bzw. der gesteuerte Widerstand 6 kann, hinsichtlich dessen zulässigen Verlustleistung klein gewählt werden.

Fig. 1 zeigt eine Ausführung eines Fehlerstromschutzschalters 1 nach dem Stand der Technik, zur netzspannungsunabhängigen Fehlerstromauslösung als schematische Darstellung der funktionellen Baugruppen. Ein derartiger Fehlerstromschutzschalter 1 ist zum Schutz von Anlagen und Menschen vorgesehen, wobei im Falle eines auftretenden gefährlichen Fehlerstromes die an den Fehlerstromschutzschalter 1 angeschlossenen Verbraucher bzw. Last 19 von einem Versorgungsnetz, umfassend den ersten Leiter N und den zweiten Leiter L1, getrennt werden. Der Fehlerstromschutzschalter 1 weist Anschlussklemmen, insbesondere Schraubanschlussklemmen, zum Anschluss wenigstens eines ersten und eines zweiten Leiters N, L1 eines elektrischen Versorgungsnetzes auf. Der dargestellte schematische Stromlaufplan gemäß Fig. 1 zeigt eine Ausführungsform mit lediglich einem ersten und einem zweiten Leiter N, L1. In dem ersten und dem zweiten Leiter N, L1 sind Trennkontakte 23, daher Schaltkontakte, welche zum Auftrennen bzw. Unterbrechen des ersten bzw. zweiten Leiters N, L1, sowie zum anschließenden Schließen, vorgesehen bzw. ausgebildet sind, angeordnet. Die beschriebenen und in Fig. 1 dargestellten Bauelemente bzw. Baugruppen sind zusammen in einem Isolierstoffgehäuse angeordnet, welches Durchbrechungen wenigstens für die Anschlussklemmen und einen manuell betätigbaren Handschalthebel zum manuellen Öffnen bzw. Schließen der Trennkontakte 23 aufweist. Weiters kann vorgesehen sein, dass der Fehlerstromschutzschalter 1 weitere - nicht dargestellte bzw. beschriebene - Baugruppen bzw. Bauteile umfasst, etwa eine Schaltstellungsanzeige, eine Auslöseanzeige und dergleichen. Fig. 1 zeigt weiters eine beispielhaft dargestellte Last 19, im Sinne eines elektrischen Verbrauchers.

Erfindungsgemäße Fehlerstromschutzschalter 1 sind als netzspannungsunabhängige Fehlerstromschutzschalter 1 ausgebildet. Die in einem derartigen netzspannungsunabhängigen Fehlerstromschutzschalter 1 zur Detektion eines Fehlerstromes und Auslösung des Fehlerstromschutzschalters 1, daher Trennen der Trennkontakte 23 angeordneten Baugruppen beziehen deren zum Auslösen notwendige Energie vollständig aus dem Fehlerstrom bzw. dem zu diesem proportionalen Fehlerstromsignal in der Sekundärwicklung 22.

Der Prüfstromkreis 2 ist mit dem ersten Leiter N verbunden und verläuft bis zum bereits besprochenen Prüfkreistrennkontakt 31, welcher leitend mit dem Prüftaster 4 verbunden ist. Der Prüftaster 4 ist weiters leitend mit dem ersten Prüfwiderstand 3 verbunden, dessen anderer Anschluss leitend mit dem zweiten Leiter L1.

Erfindungsgemäß ist vorgesehen, dass der Prüfstromkreis 2 einen Regelstromkreis 5 aufweist, und dass der Regelstromkreis 5 derart ausgebildet ist, dass ein durch den Prüfstromkreis 2 erzeugter Prüffehlerstrom - im Wesentlichen unabhängig von der anliegenden Spannung eines zu schützenden elektrischen Netzes - einen vorbestimmten und im Wesentlichen konstanten Wert aufweist. Der Begriff Wert bezeichnet in diesem Zusammenhang insbesondere einen Wert für die Stromstärke. Da er sich in der Regel bei dem Netz um ein Wechselstromnetz handelt ist selbstverständlich, dass auch der Prüffehlerstrom ein Wechselstrom ist, und sich folglich zeitlich ändert. Der Wert bezeichnet daher insbesondere einen Effektivwert des Wechselstromes. Der Prüffehlerstrom mit konstantem Wert kann auch als konstanter Prüffehlerstrom bezeichnet werden.

Ein derartiger Regelstromkreis 5 kann - zum Hervorrufen bzw. Verursachen der betreffenden Wirkung - in mannigfaltiger Art und Weise ausgebildet sein. Insbesondere kann die betreffende Funktionalität durch einen elektronischen Regelkreis oder eine kombinierte Hardware/Softwarelösung erreicht werden.

Gemäß der gegenständlichen Erfindung ist vorgesehen, dass der Regelstromkreis 5 lediglich bei geschlossenem Prüfstromkreis mit Leitern N, L1 des elektrischen Netzes schaltungstechnisch verbunden ist. Dadurch, dass der Regelstromkreis 5 lediglich während der Zeitspanne einer Prüfung des Fehlerstromschutzschalters 1 mit Strom versorgt wird, kann die Verlustleistung an den Bauelementen, insbesondere an allfälligen Halbleiterbauelementen, des Regelstromkreis 5 sehr gering gehalten werden, und auf sehr kurze Zeitabschnitte beschränkt werden. Dadurch kann die Wärmebelastung der Bauteile gering gehalten werden, wodurch kleine Bauelemente verwendet werden können. Weiters kann dadurch eine große Lebensdauer der Bauelemente erzielt werden. Die Angabe geschlossener Prüfstromkreis bezeichnet dabei insbesondere einen Zustand, bei welchem der Prüftaster 4, sowie ein gegebenenfalls vorgesehener Prüfkreistrennkontakt 31, geschlossen sind.

Um beim herkömmlichen Betrieb eines erfindungsgemäßen Fehlerstromschutzschalters 1 in einem Netz mit sinusförmigen Wechselströmen eine genaue Prüfung der Fehlerstromauslösung zu erzielen, ist insbesondere vorgesehen, dass der Regelstromkreis 5 derart ausgebildet ist, dass der durch den Prüfstromkreis 2 erzeugte Prüffehlerstrom mit dem Strom des zu schützenden elektrischen Netzes in Phase ist.

Insbesondere ist vorgesehen, dass der Prüfstromkreis 2 einen gesteuerten Widerstand 6 aufweist, zur Anpassung des Prüffehlerstroms. Durch eines derartigen gesteuerten Widerstand 6 kann der tatsächlich auftretende bzw. durch den Prüfstromkreis 2 verursachte Prüffehlerstrom einfach auf einen vorbestimmten Wert gehalten werden. Durch die Regelung des Widerstandeswertes des gesteuerten Widerstandes 6 kann einfach der tatsächlich in dem Prüfstromkreis 2 fließende Strom begrenzt bzw. geregelt werden.

Gemäß der in Fig. 2 dargestellten bevorzugten Ausführungsform ist vorgesehen, dass der gesteuerte Widerstand 6 schaltungstechnisch wenigstens mittelbar seriell zu dem ersten Prüfwiderstand 3 angeordnet ist, wodurch eine besonders einfache Regelung des gesamten wirksamen Prüfwiderstandes, welcher sich aus dem ersten Prüfwiderstand 3 und dem gesteuerten Widerstand 6 zusammensetzt, möglich ist.

Der gesteuerte Widerstand 6 kann als jede Art eines elektrischen Bauelements ausgebildet sein, welches einen Widerstand mit ohmschen Anteil aufweist, dessen Widerstandswert vorgebbar gesteuert bzw. beeinflusst werden kann. Bevorzugt ist etwa vorgesehen, dass der gesteuerte Widerstand 6 als Transistor, insbesondere als Feldeffekttransistor 7, ausgebildet ist. Insbesondere durch Ausbildung des gesteuerten Widerstands als Feldeffekttransistor 7 ist eine Steuerung des Widerstandswertes mit sehr geringer Leitung möglich. Dadurch wird der netzspannungsunabhängige Aufbau des Regelstromkreises 5 unterstützt.

Bei der bevorzugten Ausbildung des gesteuerten Widerstands 6 als Feldeffekttransistor 7 ist weiters vorgesehen, dass der Prüfstromkreis 2 einen Vollwellengleichrichter 10 aufweist, und dass der als Feldeffekttransistor 7 ausgebildete gesteuerte Widerstand 6 schaltungstechnisch mit Gleichstromanschlüssen 16 des Vollwellengleichrichters 10 verbunden ist. Dadurch ist der Einsatz eines derartig ausgebildeten Fehlerstromschutzschalters 1 an herkömmlichen Wechselstromnetzen möglich, da die bevorzugten Feldeffekttransistoren 7 lediglich zum Betrieb an Gleichstrom geeignet sind.

Der Regelstromkreis 5 weist weiters entsprechende Mittel zur Ansteuerung des gesteuerten Widerstands 6, daher zur vorgebbaren und gezielten Veränderung des Widerstandswertes des gesteuerten Widerstands 6 auf. Gemäß der dargestellten bevorzugten Ausführungsform ist dabei insbesondere vorgesehen, dass der Prüfstromkreis 2, zur Steuerung des gesteuerten Widerstands 6, einen Gleichspannungsverstärker 8, insbesondere einen Operationsverstärker 9 aufweist.

Zum Betrieb des Gleichspannungsverstärkers ist weiters bevorzugt vorgesehen, dass der Prüfstromkreis 2 eine geregelte Spannungsversorgung umfasst, welche schaltungstechnisch mit den Gleichstromanschlüssen 16 des Vollwellengleichrichters 10 sowie mit dem Gleichspannungsverstärker 8 verbunden ist. Durch die Regelung dieser Spannungsversorgung können die maximal durch den Gleichspannungsverstärker 8 möglichen Aussteuergrenzen vorgegeben werden.

Die aktive Regelung des Prüffehlerstromes erfordert einen Abgriff der jeweils momentan anliegenden Netzspannung. Hiezu ist bevorzugt vorgesehen, dass der erste Prüfwiderstand 3 und der gesteuerte Widerstand 6 durch einen Spannungsteiler 12 schaltungstechnisch überbrückt sind. Weiters ist bevorzugt vorgesehen, dass ein Abgriff 13 des Spannungsteilers 12 schaltungstechnisch mit einem ersten Eingang 14 des Gleichspannungsverstärkers 8 verbunden ist, und der Prüffehlerstrom an einem zweiten Eingang 15 des Gleichspannungsverstärkers 8 anliegt. Dadurch kann der Widerstandswert des gesteuerten Widerstandes 6 an die jeweils vorherrschende Netzspannung angepasst werden.

Nachfolgend wird die besonders bevorzugte Ausführung eines erfindungsgemäßen Fehlerstromschutzschalters 1 anhand der Fig. 2 näher beschrieben.

Figur 2 zeigt eine lediglich besonders bevorzugte Ausführungsform eines erfindungsgemäßen Fehlerstromschutzschalters 1, wobei der grundlegende Aufbau des Fehlerstromschutzschalters 1 mit dem Fehlerstromschutzschalter 1 gemäß Fig. 1 weitestgehend identisch ist, und sich die Unterschiede im Wesentlichen auf die erfindungsgemäße Ausbildung des Prüfstromkreises 2 beschränken.

Der Prüfstromkreis 2 ist mit dem ersten Leiter N verbunden und führt bis zum ersten Prüfwiderstand 3, dessen weiterer Anschluss sowohl mit einem ersten Wechselstromanschluss eines Brückengleichrichters, als auch dem zweiten Eingang 15 eines, als Operationsverstärker 9, auch als OpAmp 9 bezeichnet, ausgebildeten, Gleichspannungsverstärkers 8. Der zweite Eingang 15 des OpAmps 9 ist als invertierender Eingang ausgebildet. Der zweite Wechselstromanschluss des Brückengleichrichters ist mit dem Prüftaster 4 verbunden, welcher weiters mit dem Prüfkreistrennkontakt 31 verbunden ist, welcher wiederum schaltungstechnisch mit dem zweiten Leiter L1 verbunden ist. Der erste Prüfwiderstand 3 und der Brückengleichrichter sind mittels eines Spannungsteilers 12 überbrückt, wobei der Spannungsteiler 12 einen ersten und einen zweiten Spannungsteilerwiderstand 28, 29 aufweist, sowie einen, als Abgriff 13 des Spannungsteilers 12 bezeichneten, Kontaktpunkt zwischen den beiden Spannungsteilerwiderständen 28, 29. Der Abgriff 13 ist schaltungstechnisch mit dem ersten, nicht invertierenden, Eingang 14 des OpAmps 9 verbunden. Der Ausgang des OpAmps 9 ist schaltungstechnisch mit dem Gate, des als selbstsperrender n-Mosfet ausgebildeten Feldeffekttransistors 7 verbunden. Gate und Source des betreffenden Feldeffekttransistors 7 sind mit den Gleichstromanschlüssen 16 des Brückengleichrichters verbunden.

Der betreffende Regelstromkreis 5 weist weiters eine geregelte Spannungsversorgung zur Versorgung des OpAmps 9 auf. Die Spannungsversorgung weist eine Diode 27 und einen Vorwiderstand 30 auf, welche mit dem positiven Gleichstromanschluss 16 des Brückengleichrichters verbunden sind. Ein Anschluss des Vorwiderstandes 30 ist mit dem positiven Versorgungseingang des OpAmps 9 verbunden, sowie weiters mit einem Kondensator 25, zur Stabilisierung und Glättung der Versorgungsspannung, sowie weiters mit einer Zenerdiode 26, zur Regelung der Versorgungsspannung. Die jeweils vorhandenen weiteren Anschlüsse des Kondensators 25 sowie der Zenerdiode 26 sind, ebenso wie der negative Versorgungseingang des OpAmps, mit dem negativen Gleichstromanschluss 16 des Brückengleichrichters verbunden.

Ein derartig aufgebauter Fehlerstromschutzschalter 1 ist, ungeachtet der vorhandenen aktiven Bauelemente, ein voll netzspannungsunabhängiger Fehlerstromschutzschalter 1. Die aktiven Bauelemente werden lediglich im Falle des geschlossenen Prüftasters 4 mit Strom versorgt. Dabei benötigt der Regelstromkreis 5 nur wenige Volt verfügbare Netzspannung zu dessen Funktion.

Beim Betätigen des Prüftasters 4 fließt Strom durch den ersten Prüfwiderstand 3. Das Potential nachfolgend dem ersten Prüfwiderstand 3 liegt am zweiten Eingang 15 des OpAmps 9 an. Weiters liegt ein vom Spannungsteiler 12 abgegriffenes Potential am ersten Eingang 14 des OpAmps 9 an. Aus der Differenz dieser Potentiale wird eine Regelgröße ermittelt, und der spannungsabhängige Widerstand 6 gesteuert, welcher - über den Weg des Vollweggleichrichters 10 - seriell zu dem ersten Prüfwiderstand 3 angeordnet ist, und dessen Wert erhöht, wodurch der Prüffehlerstrom aktiv geregelt wird.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Fehlerstromschutzschalter (1), mit einem Prüfstromkreis (2) zum Erzeugen eines Prüffehlerstroms, welcher Prüfstromkreis (2) wenigstens einen ersten Prüfwiderstand (3) sowie einen Prüftaster (4) aufweist, wobei der Fehlerstromschutzschalter (1) als netzspannungsunabhängiger Fehlerstromschutzschalter (1) ausgebildet ist, **dadurch gekennzeichnet, dass** der Prüfstromkreis (2) einen Regelstromkreis (5) aufweist, und dass der Regelstromkreis (5) derart ausgebildet ist, dass ein durch den Prüfstromkreis (2) erzeugter Prüffehlerstrom - im Wesentlichen unabhängig von der anliegenden Spannung eines elektrischen Netzes - einen vorbestimmten und im Wesentlichen konstanten Wert aufweist, und dass der Regelstromkreis (5) lediglich bei geschlossenem Prüfstromkreis mit Leitern (N, L1) des elektrischen Netzes schaltungstechnisch verbunden ist.

2. Fehlerstromschutzschalter (1) nach Anspruch 1, **dadurch gekennzeichnet, dass** der Regelstromkreis (5) derart ausgebildet ist, dass der durch den Prüfstromkreis (2) erzeugte Prüffehlerstrom mit dem Strom des zu schützenden elektrischen Netzes in Phase ist.

3. Fehlerstromschutzschalter (1) nach Anspruch 1 oder 2, **dadurch gekennzeichnet, dass** der Prüfstromkreis (2) einen gesteuerten Widerstand (6) aufweist, zur Anpassung des Prüffehlerstroms.

4. Fehlerstromschutzschalter. (1) nach Anspruch 3, **dadurch gekennzeichnet, dass** der gesteuerte Widerstand (6) schaltungstechnisch seriell zu dem ersten Prüfwiderstand (3) angeordnet ist.

5. Fehlerstromschutzschalter (1) nach Anspruch 3 oder 4, **dadurch gekennzeichnet, dass** der gesteuerte Widerstand (6) als Transistor, insbesondere als Feldeffekttransistor (7), ausgebildet ist.

6. Fehlerstromschutzschalter (1) nach einem der Ansprüche 3 bis 5, **dadurch gekennzeichnet, dass** der Prüfstromkreis (2) einen Gleichspannungsverstärker (8), insbesondere einen Operationsverstärker (9), aufweist, zur Steuerung des gesteuerten Widerstands (6).

7. Fehlerstromschutzschalter (1) nach einem der Ansprüche 3 bis 6, **dadurch gekennzeichnet, dass** der Prüfstromkreis (2) einen Vollwellengleichrichter (10) aufweist, und dass der als Feldeffekttransistor (7) ausgebildete gesteuerte Widerstand (6) schaltungstechnisch mit Gleichstromanschlüssen (16) des Vollwellengleichrichters (10) verbunden ist.

8. Fehlerstromschutzschalter (1) nach Anspruch 7, **dadurch gekennzeichnet, dass** der Prüfstromkreis (2) eine geregelte Spannungsversorgung umfasst, welche schaltungstechnisch mit den Gleichstromanschlüssen (16) des Vollwellengleichrichters (10) sowie mit dem Gleichspannungsverstärker (8) verbunden ist.

9. Fehlerstromschutzschalter (1) nach einem der Ansprüche 3 bis 8, **dadurch gekennzeichnet, dass** der erste Prüfwiderstand (3) und der gesteuerte Widerstand (6) durch einen Spannungsteiler (12) schaltungstechnisch überbrückt sind.

10. Fehlerstromschutzschalter (1) nach Anspruch 9, **dadurch gekennzeichnet, dass** ein Abgriff (13) des Spannungsteilers (12) schaltungstechnisch mit einem ersten Eingang (14) des Gleichspannungsverstärkers (8) verbunden ist, und dass der Prüffehlerstrom an einem zweiten Eingang (15) des Gleichspannungsverstärkers (8) anliegt.

## Claims

1. RCCB (1) with a test circuit (2) for generating a test fault current, and the test circuit (2) comprising at least a first test resistor (3) as well as a test key (4), and the RCCB (1) is designed as an RCCB (1) independent of the mains voltage, **characterised in that** the test circuit (2) comprises a control circuit (5) and the control circuit (5) is designed so that the test fault current generated by the test circuit (2) has a predefined and essentially constant value essentially independent of the voltage of a connected power network, and **in that** the control circuit (5) is connected circuit-wise to wires (N, L1) of the power network only when the test circuit is closed.

2. RCCB (1) according to claim 1, **characterised in that** the control circuit (5) is designed as such that the test fault current generated by the test circuit (2) is in phase with the current of the protected power network.

3. RCCB (1) according to claim 1 or 2, **characterised in that** the test circuit (2) comprises a controlled resistor (6) for adjusting the test fault current.

4. RCCB (1) according to claim 3, **characterised in that** the controlled resistor (6) is connected circuit-wise in series with the first test resistor (3).

5. RCCB (1) according to one of the claims 3 or 4, **characterised in that** the controlled resistor (6) is designed as a transistor, in particular as a field effect transistor (7).

6. RCCB (1) according to claim 3 to 5, **characterised in that** the test circuit (2) comprises a direct current amplifier (8), in particular an operational amplifier (9), to control the controlled resistance (6).

7. RCCB (1) according to one of claims 3 to 6, **characterised in that** the test circuit (2) comprises a full-wave rectifier (10), and **in that** the controlled resistor (6) designed as a field effect transistor (7) is connected circuit-wise with the DC connectors (16) of the full-wave transistor (10).

8. RCCB (1) according to claim 7, **characterised in that** the test circuit (2) comprises a controlled voltage supply, which is connected circuit-wise with the DC connectors (16) of the full-wave transistor (10) and the DC amplifier (8).

9. RCCB (1) according to one of the claims 3 to 8, **characterised in that** the first test resistor (3) and the controlled resistor (6) are bridged circuit-wise by a voltage divider (12).

10. RCCB (1) according to claim 9 **characterised in that** a tap (13) of the voltage divider (12) is connected circuit-wise with a first input (14) of the direct current amplifier (8) and **in that** the test fault current applies at a second input (15) of the direct current amplifier (8).

## Revendications

1. Disjoncteur différentiel (1), comportant un circuit de test (2) destiné à produire un courant de défaut de test, lequel circuit de test (2) présente au moins une première résistance de test (3) ainsi qu'un bouton de test (4), le disjoncteur différentiel (1) étant conçu sous la forme d'un disjoncteur différentiel (1) indépendant de la tension du réseau, **caractérisé en ce que** le circuit de test (2) présente un circuit de commande (5), et **en ce que** le circuit de commande (5) est conçu de telle sorte qu'un courant de défaut de test produit par le circuit de test (2), essentiellement indépendamment de la tension actuelle d'un réseau électrique, présente une valeur prédéfinie essentiellement constante, et **en ce que** le circuit de commande (5) est relié dans le circuit, uniquement lorsque le circuit de test est fermé, à des conducteurs (N, L1) du réseau électrique.

2. Disjoncteur différentiel (1) selon la revendication 1, **caractérisé en ce que** le circuit de commande (5) est conçu de telle sorte que le courant de défaut de test produit par le circuit de test (2) soit en phase avec le courant du réseau électrique protégé.

3. Disjoncteur différentiel (1) selon la revendication 1 ou 2, **caractérisé en ce que** le circuit de test (2) présente une résistance commandée (6) pour modifier le courant de défaut de test.

4. Disjoncteur différentiel (1) selon la revendication 3, **caractérisé en ce que** la résistance commandée (6) est raccordée en série dans le circuit à la première résistance de test (3).

5. Disjoncteur différentiel (1) selon la revendication 3 ou 4, **caractérisé en ce que** la résistance commandée (6) est conçue sous la forme d'un transistor, en particulier sous la forme d'un transistor à effet de champ (7).

6. Disjoncteur différentiel (1) selon l'une des revendications 3 à 5, **caractérisé en ce que** le circuit de test (2) présente un amplificateur de tension continue (8), en particulier un amplificateur opérationnel (9), destiné à gérer la résistance commandée (6).

7. Disjoncteur différentiel (1) selon l'une des revendications 3 à 6, **caractérisé en ce que** le circuit de test (2) présente un redresseur pleine onde (10), et **en ce que** la résistance commandée (6) conçue sous la forme d'un transistor à effet de champ (7) est reliée dans le circuit aux bornes à courant continu (16) du redresseur pleine onde (10).

8. Disjoncteur différentiel (1) selon la revendication 7, **caractérisé en ce que** le circuit de test (2) comprend une alimentation électrique régulée qui est reliée dans le circuit aux bornes à courant continu (16) du redresseur pleine onde (10) ainsi qu'à l'amplificateur de tension continue (8).

9. Disjoncteur différentiel (1) selon l'une des revendications 3 à 8, **caractérisé en ce que** la première résistance de test (3) et la résistance commandée (6) sont pontées dans le circuit par un réducteur de tension (12).

10. Disjoncteur différentiel (1) selon la revendication 9, **caractérisé en ce qu'**une prise (13) du réducteur de tension (12) est reliée dans le circuit à une première entrée (14) de l'amplificateur de tension continue (8), et **en ce que** le courant défaut de test est présent à une seconde entrée (15) de l'amplificateur de tension continue (8).
